# EUROPEAN PATENT APPLICATION

(11) **EP 1 622 368 A1**
(43) Date of publication of application: **01.02.2006**
(21) Application number: 04727748.8
(22) Date of filing: 15.04.2004
(51) Int. Cl.: H04N 5/44

(54) **WIRELESS AV SYSTEM, AV SYSTEM, WIRELESS CENTER, AV OUTPUT DEVICE, STATION SELECTION METHOD, STATION SELECTION DATA GENERATION METHOD, CONTROL PROGRAM, AND COMPUTER-READABLE RECORDING MEDIUM CONTAINING THE CONTROL PROGRAM**

(30) Priority: 17.04.2003 JP 2003113211; 13.04.2004 JP 2004118368
(71) Applicant: SHARP KABUSHIKI KAISHA, Osaka-shi, Osaka 545-8522 (JP)
(72) Inventor: TOKIMOTO, Toyoshi, (JP); NISHIDA, Shinichi, (JP)
(74) Representative: Müller, Frithjof E.
(86) International application number: PCT/JP2004/005428
(87) International publication number: WO 2004/093440

(57) **Abstract**

A TV microcomputer makes a request to a wireless center microcomputer through a SS transmitting/receiving unit in a TV main unit and a SS transmitting/receiving unit in a wireless center, and the wireless center microcomputer sends a response for notifying reception of the request command to the TV microcomputer through the SS transmitting/receiving unit in the wireless center and the SS transmitting/receiving unit in the TV main unit. The TV microcomputer processes the received request for an auto scan, and transmits channel identification information for setting a channel, which includes skip information indicative of whether or not a station for the channel exists, to the TV microcomputer as a response for notifying completion of the process. The channel identification information is stored in the TV main unit. Further, when an up-down channel selection is performed, the channel identification information is referred to to identify a selected channel, and the identified channel is transmitted to the wireless center as a direct channel selection command. This reduces a delay time involved in the exchange of commands.

## Description

### TECHNICAL FIELD

The present invention relates to an AV system, particularly to a wireless AV system in which an AV output device and a wireless center are separately provided and connected to perform communication wirelessly, an AV system, a wireless center, an AV output device, a channel selecting method, a channel select data generating method, a control program, and a computer-readable recording medium storing the control program.

### BACKGROUND ART

In recent years, many receiving/reproducing systems for video and audio etc. (AV systems) have been developed which employ a thin liquid crystal display as a monitor section for reproducing (displaying) video.. Liquid crystal displays have such significant advantages as realizing a large-sized screen display while downsizing the display in weight and thickness.

For example, such a system is disclosed in which a tuner and a monitor sections of a television receiver are provided separately, and a video signal and an audio signal are transmitted from the tuner section to the monitor section. In this system, the tuner section, which is separately provided and connected to an antenna line, chooses a channel and transmits a video and an audio signals of the selected channel to the monitor section wirelessly, so that the video and the audio signals can be reproduced (see Patent References 1 and 2, for example).
[Patent Reference 1]
   Japanese Unexamined Patent Publication, No. 160927/2001 (Tokukai 2001-160927, (publication date: June 12, 2001)
[Patent Reference 2]
   Japanese Unexamined Patent Publication, No. 358966/2001 (Tokukai 2001-358966, (publication date: December 26, 2001)

In the system, display is carried out by receiving a data stream, and information such as commands can be exchanged bidirectionally between the monitor side and the tuner side. In this system, the monitor side generally selects a channel. In order to perform an up-down channel selection, a channel is entered using an up-down selection key at the monitor side. The channel selection is performed at the monitor side because a user views and listens to video and the like displayed on the monitor. As the up-down channel selection key is manipulated at the monitor side, the input is converted to a command applicable in a wireless AV transmission system which relays information between the monitor side and the tuner side wirelessly. Thus, the command can be sent to the tuner side after a predetermined time interval. Then, at the tuner side, the command is decoded, so that the up-down channel selection is actually effected. Due to a delay time involved in the interval time for exchanging commands, in the wireless AV transmission system, a user's input may not be responded to quickly (the up-down selection is not smoothly performed).

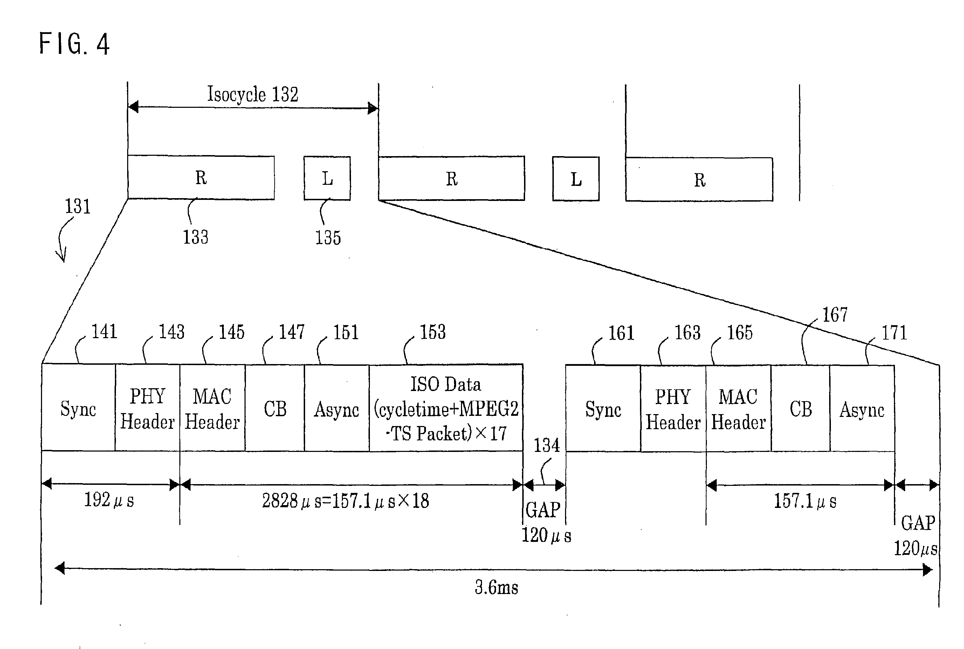

According to the conventional system, a delay time occurs, for example, before a selected channel number is displayed on the monitor as shown in Fig. 4 of the present invention. In Fig. 4, a key code is transmitted from the monitor side to the tuner side in an isocycle of 3.6 ms * 16 = approximately 60 ms, and in the next isocycle 60 ms, a result of decoding the key is sent back to the monitor side from the tuner side. That is, when a channel up-down input is decoded at the tuner side, the key code is transmitted from the monitor section to the tuner section in an interval of 60 ms. Then, the channel up-down input is decoded and the selected channel number is sent back to the monitor section from the tuner section in an interval of 60 ms. Thus, the delay time will be 120 ms in total, thereby militating against quick monitor display of a channel number of the channel selected by the up-down selection. This delay time will be a communication interval, which is controlled by a smart link transmitter.

In a system of the present invention, a tuner section, which is provided separately from a monitor section and connected to an antenna line, chooses a channel and transmits a video and an audio signals of the selected channel to the monitor section wirelessly, so that the video and the audio signals can be reproduced. An object of the present invention is, in such a system, to realize a wireless AV system, an AV system, a wireless center, an AV output device, a channel selecting method, a channel select data generating method, a control program, and a computer-readable recording medium storing the control program, which overcome the above problem and thereby obtain a good response characteristic to a user's input operation of an up-down channel selection.

### DISCLOSURE OF INVENTION

In order to solve the problem, a wireless AV system of the present invention includes a wirelesss center having: a tuner section for performing channel selection, and a first transmitting/receiving section for transmitting/receiving broadcast information of a channel selected by the tuner section and other data; and an AV output device having: a display section, a channel selection input section for receiving an input operation causing the tuner section to perform channel selection, a second transmitting/receiving section capable of receiving the broadcast information and transmitting/receiving data wirelessly to/from the first transmitting/receiving section, a first channel identification information memory section for storing channel identification information being available for identifying a channel selected by the up-down input operation.

According to the above arrangement, when the channel up-down operation is performed in the AV output device, with reference to the channel identification information stored in the first channel identification information memory section, a channel selected by the up-down input operation can be identified, and transmitted to the tuner side. This reduces a delay time involved in the exchange of commands, which has conventionally been a problem, so that a response to a user's input for up-down channel selection can be improved.

A wireless center of the present invention includes a tuner section for performing channel selection; and a first transmitting/receiving section for wirelessly transmitting/receiving broadcast information of a channel selected by the tuner section and other data, the wireless center further including: a second channel identification information memory section for storing channel identification information, the channel identification information being generated responsive to an input operation causing the tuner section to perform channel selection, and identifying a channel selected by the tuner section, the input operation being provided to the tuner section from the AV output device, which is provided separately from the wireless center and includes a display section for displaying the broadcast information of the channel.

According to the above arrangement, in the wireless center, a channel, which is generated at the AV output device and received from the AV output device, can be identified based on the channel identification information stored in the second channel identification information memory section. Therefore, when a channel up-down operation is performed in the AV output device, a channel selected by the up-down input operation can be identified, and transmitted to the tuner section. This reduces a delay time involved in the exchange of commands, which has conventionally been a problem, so that a response to a user's input for up-down channel selection can be improved.

Further, an AV output device of the present invention includes a display section; a channel selection input section for receiving an input operation causing the tuner section to perform channel selection, the tuner section in a wireless center being provided separately from the display section; a transmitting/receiving section capable of receiving the broadcast information transmitted from the wireless center, and transmitting/receiving data wirelessly to/from the wireless center; and a first channel identification information memory section for storing, when channel up-down input operation is performed as the input operation, channel identification information being available for identifying a channel selected by the up-down input operation.

According to the above arrangement, when the channel up-down operation is performed in the AV output device, with reference to the channel identification information stored in the first channel identification information memory section, the channel selected by the up-down input operation can be identified, and transmitted to the tuner side. This reduces a delay time involved in the exchange of commands, which has conventionally been a problem, so that a response to a user's input for up-down channel selection can be improved.

A channel selecting method of the present invention is a channel selecting method between a wireless center and an AV output device, the wireless center including the tuner section for performing channel selection, and the AV output device including a display section, a channel selection input section which receives an input operation causing the tuner section to perform the channel selection, and a memory section, the method including the steps of: causing the tuner section to perform the channel selection based on the input operation; collecting, based on a result of the channel selection performed by the tuner section, channel identification information including skip information indicative of whether or not a station has been registered for each channel and transmitting the channel identification information to the AV output device wirelessly; and storing the transmitted channel identification information in the memory section, detecting, responsive to the up-down input operation in the channel selection input section, a channel identified with reference to the channel identification information stored in the memory section, generating a direct channel selection command for selecting the identified channel, and transmitting the direct channel selection command to the wireless center side wirelessly.

According to the above arrangement, the channel identification information, which includes the skip information obtained based on a result of a channel scan carried out in the tuner section, is transmitted from the wireless center to the AV output device. When the channel up-down operation is performed in the AV output device, with reference to the channel identification information stored in the memory section, the input can be converted to the direct channel selection command for selecting the channel identified by the up-down input operation, and transmitted to the tuner side. This reduces a delay time involved in the exchange of commands, which has conventionally been a problem, so that a response for up-down channel selection can be improved. Further, this facilitates creating or updating the channel identification information because the skip information or the like generated in the tuner section is used.

Further, a channel selecting method of the present invention is a channel selecting method in an AV output device, the AV output device being connected with a wireless center including a tuner section for performing channel selection, so as to perform communication with the wireless center wirelessly, and including a display section, a channel selection input section which receives an input operation causing the tuner section to perform the channel selection, and a memory section, the method including the steps of: causing the tuner section to perform the channel selection based on the input operation; obtaining, based on a result of the channel selection performed by the tuner section, channel identification information including skip information indicative of whether or not a station has been registered for each channel and storing the channel identification information in the memory section; and detecting, responsive to the up-down input operation in the channel selection input section, a channel identified with reference to the channel identification information stored in the memory section, generating a direct channel selection command for selecting the identified channel, and transmitting the direct channel selection command to the wireless center side wirelessly.

According to the above arrangement, the channel identification information, which includes the skip information obtained based on a result of a channel scan carried out in the tuner section, is transmitted from the wireless center to the AV output device. When the channel up-down operation is performed in the AV output device, with reference to the channel identification information stored in the memory section, the input can be converted to the direct channel selection command for selecting the channel identified by the up-down input operation, and transmitted to the tuner side. This reduces a delay time involved in the exchange of commands, which has conventionally been a problem, so that a response for up-down channel selection can be improved. Further, this facilitates creating or updating the channel identification information because the skip information or the like generated in the tuner section is used.

Further, a channel select data generating method of the present invention is a channel select data generating method in a wireless center, the wireless center being connected with an AV output device so as to perform communication with the AV output device wirelessly, and including a tuner section for performing channel selection, the AV output device including a display section, a channel selection input section which receives an input operation causing the tuner section to perform the channel selection, and a memory section, the channel select data generating method including the steps of: causing the tuner section to perform the channel selection based on the input operation; collecting, based on a result of the channel selection, channel identification information including skip information indicative of whether or not a station has been registered for each channel; and transmitting the channel identification information wirelessly to the AV output device side in one transmission.

According to the above arrangement, in the wireless center, the channel identification information, which includes the skip information indicative of whether or not a station has been registered for each channel, is collected based on the result of the channel selection performed by the tuner section. Then, the channel identification information is transmitted from the wireless center to the AV output device in one transmission and used as the channel identification information. Thus, there is no need of preparing separate channel identification information to be used in the AV output device. Further, this eliminates additional processes for creating the channel identification information, because the channel identification information including the skip information indicative of whether or not the station has been register each channel is collected based on the result of the channel selection performed by the tuner section.

Further, an AV system of the present invention includes a tuner device having: a tuner section for performing channel selection, and a first transmitting/receiving section for transmitting/receiving broadcast information of a channel selected by the tuner section and other data; and an AV output device being provided detachably from the tuner device, the AV output device having: a display section, a channel selection input section for receiving an input operation causing the tuner section to perform the channel selection, a second transmitting/receiving section capable of receiving the broadcast information and transmitting/receiving data to/from the first transmitting/receiving section, and a first channel identification information memory section for storing, when a channel up-down operation is performed as the input operation, channel identification information being available for identifying a channel selected by the up-down input operation.

According to the above arrangement, in the AV system including the AV output device and the tuner device, which are detachably provided, when the channel up-down operation is performed in the AV output device, with reference to the channel identification information stored in the first channel identification information memory section, a channel selected by the up-down input operation can be identified, and transmitted to the tuner side. This reduces a delay time involved in the exchange of commands, which has conventionally been a problem, so that a response to a user's input for up-down channel selection can be improved.

Note that, the wireless center may be realized by a computer. In this case, (i) a wireless center control program, which allows the computer to realize the wireless center by causing the computer to function as the sections, and (ii) a computer-readable recording medium storing the control program are within the scope of the present invention.

Further, the AV output device may be realized by a computer. In this case, (i) a wireless center control program, which allows the computer to realize the AV output device by causing the computer to function as the sections, and (ii) a computer-readable recording medium storing the control program are within the scope of the present invention.

For a fuller understanding of the nature and advantages of the invention, reference should be made to the ensuing detailed description taken in conjunction with the accompanying drawings.

### BRIEF DESCRIPTION OF DRAWINGS

Fig. 1 illustrates an exemplary structure of a television receiving/reproducing system according to the present embodiment.
Fig. 2 is a function block diagram illustrating an exemplary structure of a tuner side (wireless center side) device in the television receiving/ reproducing system according to the present embodiment.
Fig. 3 is a function block diagram illustrating an exemplary structure of a monitor side (TV side) device in the television receiving/reproducing system according to the present embodiment.
Fig. 4 is a view illustrating an exemplary structure of data exchanged between the tuner side and the monitor side in the television receiving/reproducing system according to the present embodiment.
Fig. 5 is a view representing an example of channel setting menus.
Fig. 6 is an exemplary structure of a remote control device.
Fig. 7 is an exemplary structure of skip information obtained by auto preset.
Fig. 8 is a view representing an exemplary sequence of bidirectional communication between the tuner side and the monitor side in the television receiving/reproducing system according to the present embodiment.
Fig. 9 is an explanatory view schematically illustrating the television receiving/reproducing system according to the present embodiment.
Fig. 10 is a functional block diagram illustrating an exemplary structure of the tuner side and the monitor side in the television receiving/reproducing system according to the present embodiment.
Fig. 11 is an explanatory view representing one example of a data structure of channel specification information managed by the tuner side and the monitor side in the television receiving/reproducing system according to the present embodiment.
Fig. 12 is a flow chart representing sequential processes such as a direct channel selection command generation, transmission, channel change, and the like when a channel is changed in the television receiving/reproducing system according to the present embodiment.

### BEST MODE FOR CARRYING OUT THE INVENTION

A wireless AV system of the present invention includes a monitor (AV output device) and a wireless center having a tuner. The monitor and the wireless center are provided separately, and a bidirectional communication is performed therebetween. Specifically, the communication is performed wirelessly. In the system, the monitor side stores skip information, which is associated with whether or not a station corresponding to a channel number exists.

For example, when the monitor side makes a request to the tuner side to carry out an auto scan for setting a channel via remote input, the monitor side receives, as a response to the request, skip information that has been actually obtained at the tuner side. The skip information is, for example, obtained based on a result of the channel auto scan. By storing the skip information in a memory section provided in the monitor side, a selected channel can be identified even when up-down channel selection is performed by a user. When a request for the channel selection is made to the tuner side, by sending a direct channel selection command to the tuner side, it is possible to shorten a time interval between the input operation for the up-down channel selection and execution of displaying the selected channel on the monitor. The direct channel selection command serves to directly select the channel identified by the monitor based on the up-down channel selection.

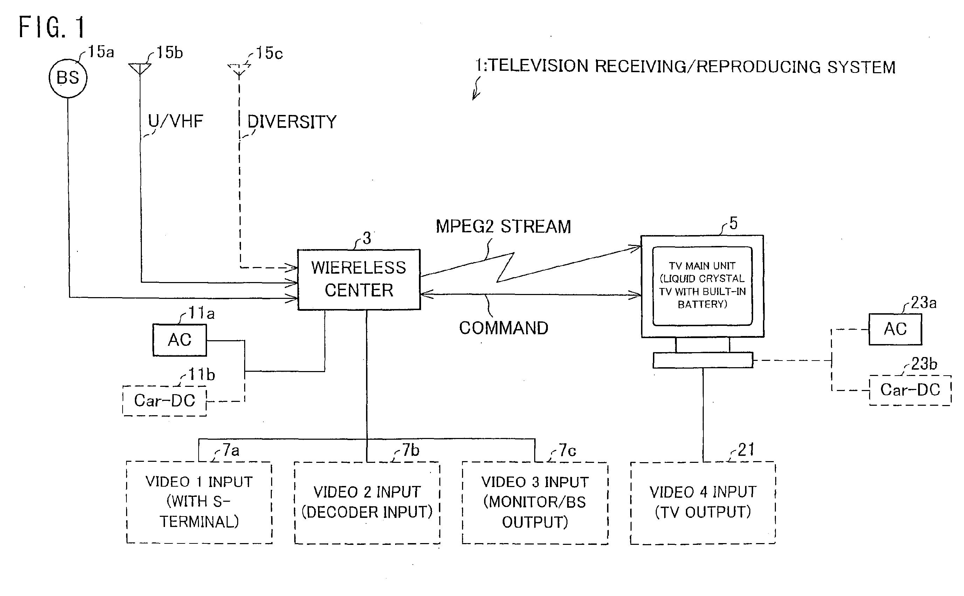

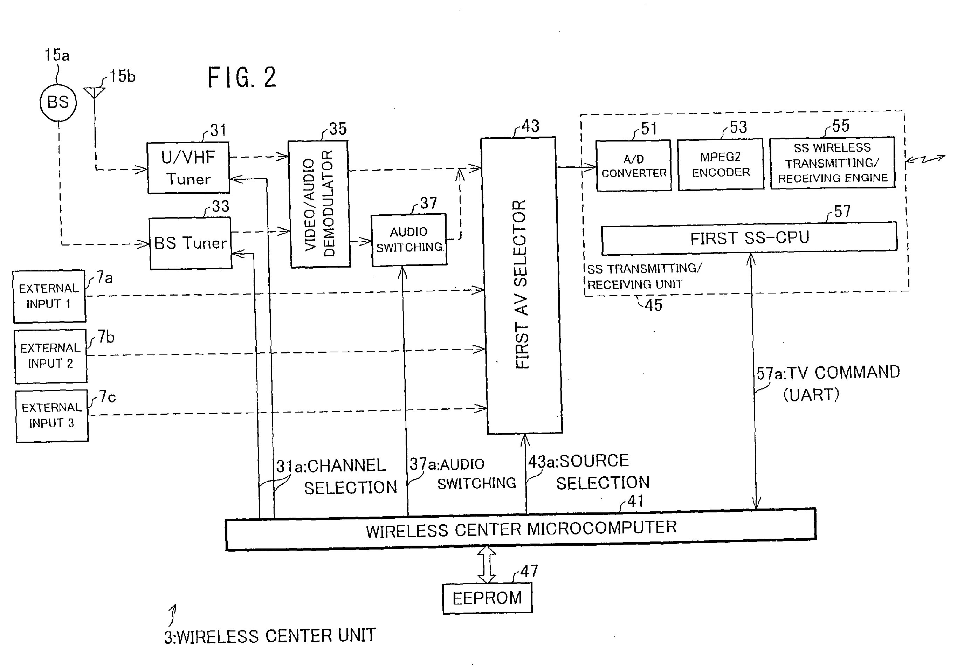

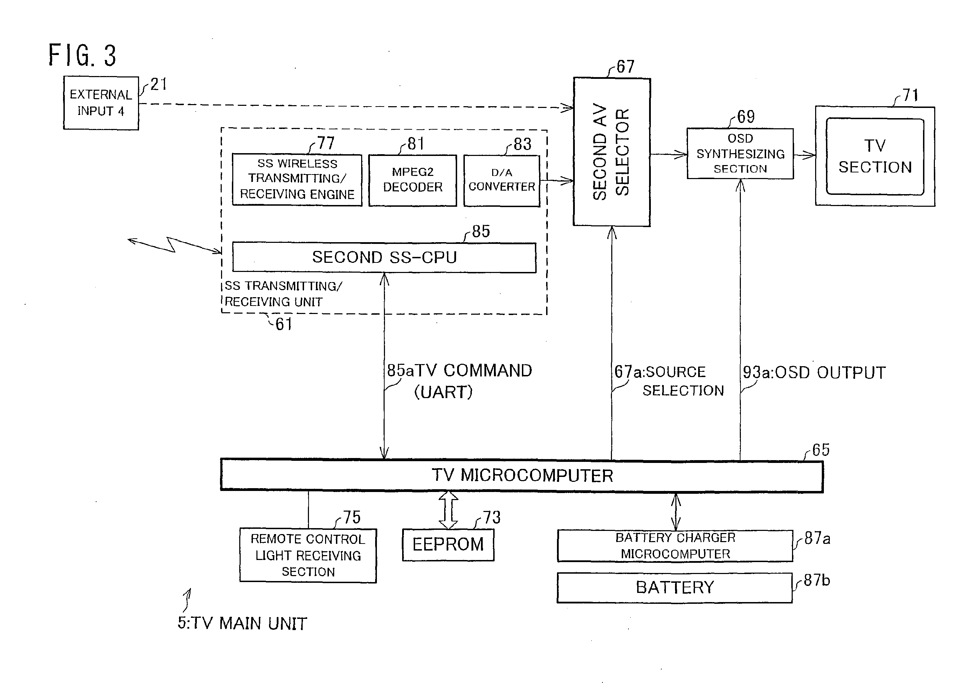

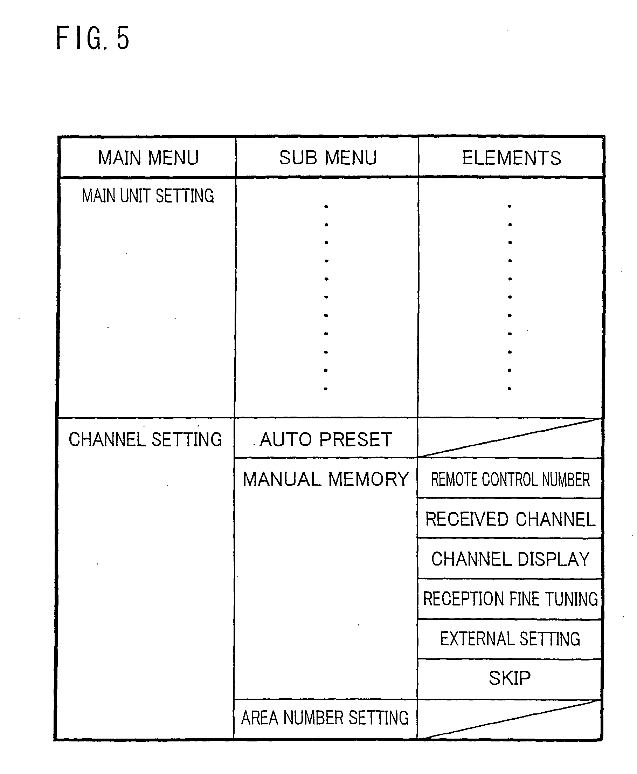

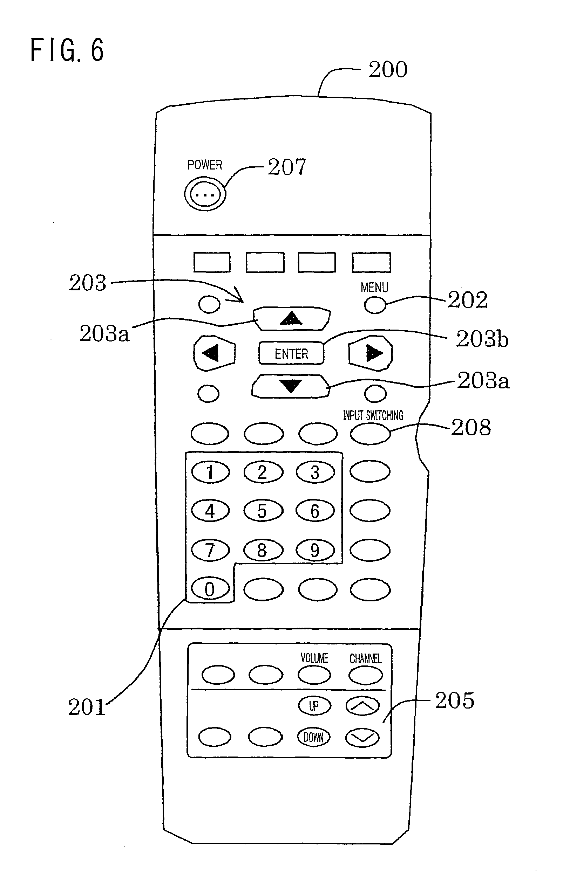

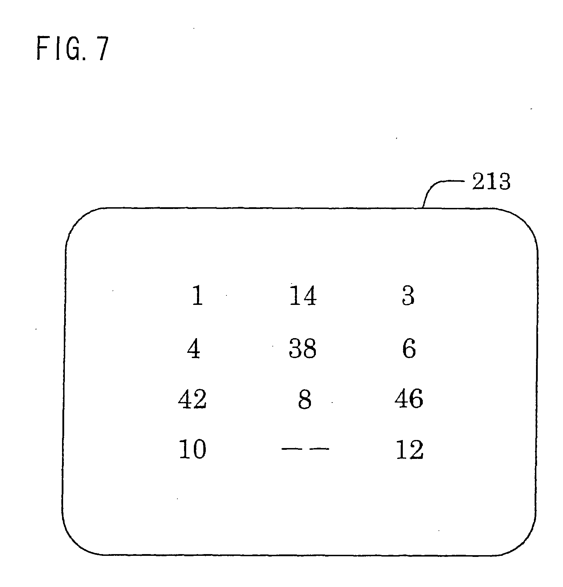

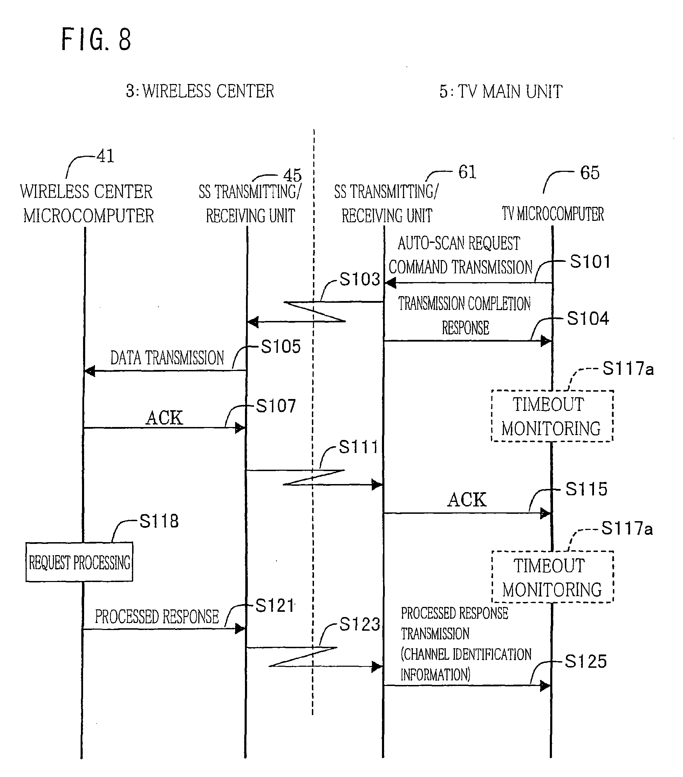

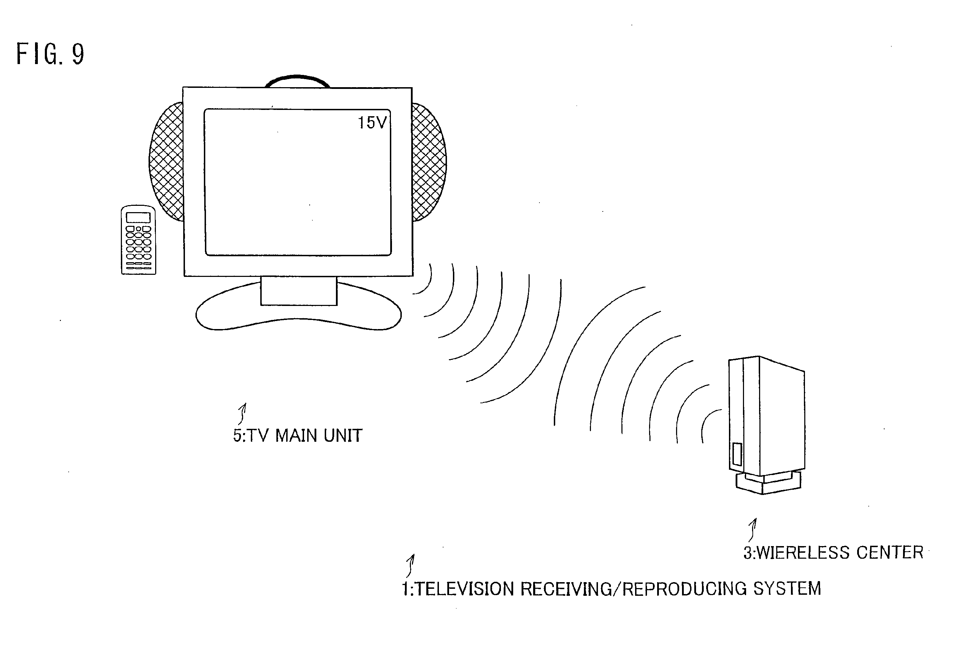

As to the wireless AV system according to one embodiment of the present invention, the following describes a structure of a television receiving/reproducing system 1 by way of example with reference to figures. Fig. 1 illustrates an exemplary structure of the television receiving/reproducing system 1 of the present embodiment. Fig. 2 is a functional block diagram illustrating an exemplary structure of a wireless center unit 3 as a tuner side device in the television receiving/reproducing system 1 of the present embodiment. Fig. 3 is a functional block diagram illustrating an exemplary structure of a TV main unit 5 as a monitor side device in the television receiving/reproducing system 1 of the present embodiment. Fig. 4 is a view illustrating an exemplary structure of data exchanged between the tuner side and the monitor side in the television receiving/reproducing system 1 of the present embodiment. Fig. 5 is a view representing an exemplary structure of menus including a channel setting menu. Fig. 6 is a view illustrating an exemplary structure of a remote control device. Fig. 7 is a view representing an exemplary structure of skip information obtained by auto preset. Fig. 8 is a view illustrating an example of a sequence of bidirectional communication between the tuner side and the monitor side in the television receiving/reproducing system 1 of the present embodiment. Fig. 9 is an explanatory view illustrating a schematic structure of a television receiving/reproducing system 1, which is a display-separated wireless TV receiver.

As illustrated in Figs. 1 and 9, a receiving/reproducing system (wireless AV system) 1 of the present embodiment includes a wireless center 3, i.e., the tuner side, and a TV (TV main unit) 5 incorporating a liquid crystal monitor with a built-in battery.

As illustrated in Fig. 9, the TV main unit 5 is wireless with a built-in battery. Further, the TV main unit 5 has a remote controller so as to operate a videocassette recorder or the like by remote control. The wireless center 3 is connected to: (i) a BS antenna, a U/V antenna, or the like; (ii) an AV device such as a DVD player, a videocassette recorder, or the like; (iii) a set top box for CATV; (iv) or the like. Video and/or audio data is transmitted wirelessly from the wireless center 3 to the TV main unit 5.

Further, as illustrated in Fig. 1, the wireless center 3 includes a video 1 input terminal 7a (with S-terminal), a video 2 input (decoder input) terminal 7b, a video 3 input terminal 7c (also serves as monitor/BS output), an AC power terminal 11a, and a Car-DC terminal 11b which enables channel selection in a car for example, a BS antenna 15a, a UHF/VHF antenna 15b, and a diversity antenna 15c. On the other hand, the TV 5 with the liquid crystal monitor includes a video 4 input terminal 21 (also serves as TV output), an AC power terminal 23a, and a Car-DC terminal 23b which enables viewing even in a car for example.

The wireless center 3 and the TV 5 with the liquid crystal monitor are connected to perform communication by radio specified under IEEE802.11b. From the wireless center 3 to the TV 5 with the liquid crystal monitor, MPEG2 stream information is sent by radio, while other commands (control commands) data or the like are mutually transmitted through bidirectional communication.

With reference to Fig. 2, described next is an exemplary structure of a tuner side (wireless center side) device. Explanations are omitted for constituting elements described in Fig. 1. As illustrated in Fig. 2, the wireless center 3 includes a wireless center microcomputer 41 for controlling the entire wireless center, a first AV selector 43, and a spread spectrum (SS) transmitting/receiving unit 45. From the video input 1 through 3, i.e., (external input) 7a through 7c, are coordinated to be switched by the AV selector 43 based on a source selection command 43a.

Further, the wireless center 3 includes a BS tuner 33 connected to the BS antenna 15a, and a U/VHF tuner 31 connected to the UHF/VHF antenna 15b. In the wireless center 3, a channel selection process is carried out, based on a channel selection command 31a, by the wireless center microcomputer 41 capable of reading a first memory section (EEPROM) 47. After the channel selection, the processed signal is inputted to a video/audio demodulator 35 to be demodulated. Further, an audio conversion process is carried out by an audio conversion section 37 based on an audio conversion command 37a, which is supplied from the wireless center microcomputer 41. The video signal, and the audio signal on which the audio conversion process is carried out are inputted to the first AV selector 43. At the first AV selector 43, a source selection process is carried out based on the audio conversion command 37a supplied from the wireless center microcomputer 41, and the signals are inputted to the SS transmitting/receiving unit 45.

The SS transmitting/receiving unit 45 includes (i) an A/D converter 51, (ii) an MPEG2 encoder 53, (iii) a first SS wireless transmitting/receiving engine 55, and (iv) a first SS-CPU 57 which controls (i), (ii), and (iii). The video and audio signals, on which the source selection process is carried out based on the source select command 43a, are converted from analog to digital signals by the A/D converter 51, and encoded to an MPEG2 format by the MPEG2 encoder 53, for example. Further, the data encoded to the MPEG2 format is transmitted to the TV 5 side incorporating the liquid crystal monitor with the built-in battery based on a TV command 57a from the wireless center microcomputer 41, while various commands (data) are bidirectionally communicated with the TV 5 incorporating the liquid crystal monitor with the build-in battery.

The TV 5 with the liquid crystal monitor includes a TV microcomputer 65, a SS transmitting/receiving unit 61, a second AV selector 67, a TV section (liquid crystal display) 71, and a remote control light receiving section 75. The TV microcomputer 65 is capable of reading a second memory section (EEPROM) 73, and the remote control light receiving section 75 receives an input from the remote control device (Fig. 7). The SS transmitting/receiving unit 61 includes (i) a second SS wireless transmitting/receiving engine 77, (ii) an MPEG2 decoder 81, (iii) a D/A converter 83, and (iv) a second SS-CPU 85 which controls (i), (ii), and (iii). Further, the TV 5 with the liquid crystal monitor is a battery driven type, and includes a battery 87b and a battery charger microcomputer 87a.

The stream information, which has been sent from the wireless center 3 side and encoded to the MPEG2 format, is received by the second SS wireless transmitting/receiving engine 77 in the SS transmitting/ receiving unit 61 according to an instruction from the second SS-CPU 85, which receives a TV command 85a from the TV microcomputer 65. The encoded data is decoded by the MPEG2 decoder 81, and converted from digital to analog signals by the D/A converter 83. The D/A converted AV signal information is sent to the second AV selector 67, where a selection is performed, based on a source selection command 67a from the microcomputer 65, between the AV signal information and an external input signal supplied from an external input (4) 21. For example, after an arbitrary OSD process is carried out based on an OSD output command 93a from the TV microcomputer 65, the signals are sent to the TV section 71 and display is carried out based on the video/audio signal information.

As described above, the TV microcomputer 65 internally has an OSD generating function section, and carries out display of information such as a program channel, a time, a tonal volume, etc., on a screen such as a TV screen or the like. In video apparatuses such as TVs, or electric apparatuses such as TV conference systems, display of information including a program channel, a time, and a tonal volume, etc. is generally carried out on a TV screen. OSD data is not an image and is retained in a so-called bit map format. Therefore, the OSD data is converted from the bit map to pixel values represented by Y, Cb, or Cr in a YUV format, and the converted pixels are superposed over an original image for television broadcasting. Further, if the external input (4) 21 is connected to an image reproducing apparatus such as a DVD (not shown) or a set top box for CATV, it is possible to display an OSD on a display screen, by superposing the OSD image on a reproduced image or video image supplied from an external source. Note that, the OSD synthesizing section 69 (Fig. 3) performs a process for superposing an OSD image over an original image for television broadcast.

Fig. 4 illustrates an exemplary structure of transmitting/receiving data. As illustrated in Fig. 4, in the television receiving/reproducing system of the present invention, transmitting/receiving data 131, which is exchanged between the tuner side and the monitor side, is transmitted/received between the first SS wireless transmitting/receiving engine 55 and the second SS wireless transmitting/receiving engine 77 in a periodic cycle defined by an isocycle 132. As shown in Fig. 4, a transmitting/receiving data packet is constituted of an R packet 133, a gap 134, and an L packet 135. The R packet 133 is transmitted from the wireless center 3, i.e., route (R) to the TV 5 with the liquid crystal monitor, i.e., leaf (L). The L packet 135 is transmitted from the TV 5 with the liquid crystal monitor, i.e., leaf (L) to the wireless center 3, i.e., route (R). The gap 134 intervenes between the R packet 133 and the L packet 135.

The R packet 133 includes a long preamble (1Mbps) and other data 145 through 153 (11MHz). Within a period of 192 µs, the long preamble (1Mbps) includes synchronous data 141 and PHY header data 143. On the other hand, the other data includes MAC header 145, control data (CB) 147, status command data 151 including asynchronous data, and synchronous data (isochronous data) 153. The status command data 151 includes a status command transmitted from the wireless station to the TV main unit side, and skip information which will be described later. The synchronous data 153 is video stream data in the MPEG2.

Subsequent to the R packet 133, the gap section (GAP) 134 having a period of 120 µs is provided. Then, the L packet 135, which is transmitted from the TV main unit side to the wireless station, is provided. Like the R packet 133, the L packet 135 includes a long preamble (1Mbps) having 161 and 163, and other data (11MHz). The other data includes a MAC header section 165, a retry tag 167, and an asynchronous data section 171. The asynchronous data section 171 includes a status command transmitted from the TV main unit side to the wireless station side. All the above-mentioned data are transmitted in a cycle of 3.6 ms.

Fig. 5 represents an example of a channel setting menu. As shown in Fig. 5, the channel setting menu includes auto preset (automatic tuning), manual memory, and area number setting. The manual memory includes the selection of a remote control number, received channel display, channel display, reception fine tuning, external setting, and skip.

Fig. 6 illustrates an exemplary structure of a remote control device. As shown in Fig. 6, a remote control device 200 includes a channel number input section 201, selection buttons 203, up-down channel selection buttons 205, and a power switch 207. The channel number input section 201 has direct channel select buttons, which enable direct input using channel numbers. The up-down channel selection buttons 205 are used for selecting a channel one by one by using ± keys. The selection buttons 203s include selection buttons 203a and a selection enter button 203b.

Fig. 7 represents an exemplary layout of channel numbers in a display screen obtained by the auto preset. By selecting execution of the auto preset using the selection buttons 203 (Fig. 6), an auto preset process is carried out and a status, which indicates the process is being carried out, is displayed in a channel-related display screen. At the completion of the auto preset process, a stored channel number list 213 is displayed. In the channel number list 213, stored channel numbers are listed in order of the associated direct channel selection buttons from upper left. In the represented example, channels 1 through 12 are stored in channel selection numbers 1 through 12, while channels 13 through 62 are stored in blank numbers, whose channels have not been received. Channels and their positions on the remote control device are associated in such a manner that a position of channel 1 is for channel 1, a position of channel 2 is for channel 14, a position of channel 3 is for channel 3, a position of channel 4 is for channel 4, a position of channel 5 is for channel 38, etc. As channel identification information, the associated information is stored in the second memory section (EEPROM) 73 illustrated in Fig. 3.

The channel identification information may be generated by the auto channel scan. The channel identification information is also generated responsive to an input operation for up-down channel selection and may be generated based on skip information indicative of whether or not a station for the selectable channel exists. In order to generate the channel identification information based on the skip information, information needs to be previously accumulated in the first memory section (EEPROM) 47 at the wireless station side sequentially. Then, when a certain amount of information is accumulated, the skip information may be transmitted from the wireless station side to the TV main unit side in one transmission, so as to be stored in the second memory section (EEPROM) 73 at the TV main unit side.

With reference to Fig. 8, the following describes an example of creating the channel identification information. Fig. 8 is a sequence diagram which chronologically illustrates exchanges of information among the wireless center microcomputer 41, the SS transmitting/receiving unit 45, the SS transmitting/receiving unit 61, and the TV microcomputer 65. The wireless center microcomputer 41 and the SS transmitting/receiving unit 45 are at the wireless center 3 side, while the SS transmitting/receiving unit 61 and the TV microcomputer 65 are at the TV main unit 5 side. For example, the TV microcomputer 65 makes an auto scan request command to the wireless center microcomputer 41 by sending a request command through the SS transmitting/receiving unit 61 at the TV main unit 3 and the SS transmitting/receiving unit 45 at the wireless center 3 (S101 - S103 - S105). Correspondingly, through the SS transmitting/receiving unit 45 at the wireless center 3 and the SS transmitting/receiving unit 61 at the TV main unit 5, the wireless center microcomputer 41 sends the TV microcomputer 65 a response which notifies reception of the request command (S107 - S111, S115). Further, a transmission completion response is also sent back to the microcomputer 65 from the SS transmitting/receiving unit 61 (S104). Meanwhile, in the TV microcomputer 65 at the TV main unit 5, timeout monitoring is performed (S117a).

The wireless center microcomputer 41 processes the received auto scan request (S118). At the completion of the process, channel identification information is transmitted to the microcomputer 65 as a response for notifying the completion of the process (S121, S123, S125). The channel identification information pertains to which channel has been set and includes the skip information indicative of whether or not a station for a selected channel exists. The channel identification information is stored in the EEPROM (second memory section) 73 provided in the TV main unit 5. When up-down channel selection is performed by the remote control device 200 (Fig. 6), a direct channel selection command is transmitted to the wireless center unit (tuner section) 3. The direct channel command serves to select a channel identified with reference to the channel identification information, which is stored in the EEPROM 73 and available for identifying the channel selected by the up-down input operation.

Thus, when an up-down channel selection key is entered at the TV main unit 5, correspondingly, the input is converted to a direct channel selection command, and then transmitted to the wireless center unit 3. That is, the up-down channel selection key is decoded and converted to the direct channel selection command at the monitor side, and then transmitted to the tuner side. Therefore, at the wireless center unit 3, there is no need of decoding and converting the up-down channel selection command to a direct channel selection command. This shortens a delay time involved in the interval time for exchanging commands, thereby improving a response to the user's input for up-down channel selection. For example, compared to a conventional system, a time for displaying a channel number of the selected channel is shortened by 120 ms or more in the television receiving/reproducing system 1.

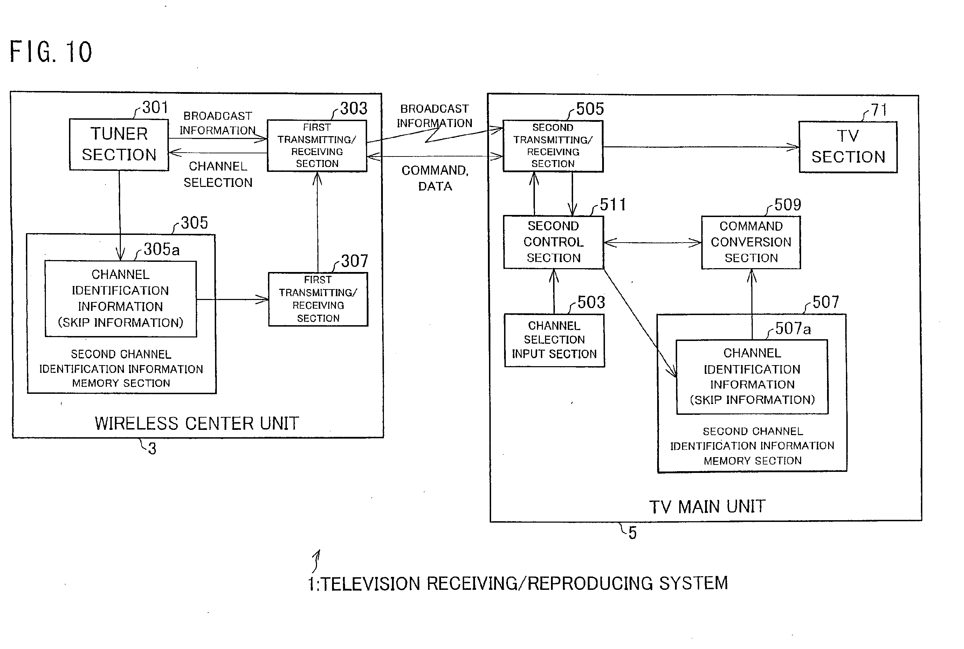

Fig. 10 illustrates a functional block diagram illustrating a specific structure of the television receiving/reproducing system 1. With reference to Fig. 10, the following describes a specific functional structure of the wireless AV system of the present invention, which is applied in a display-separated wireless TV receiver.

As illustrated in Fig. 10, the television receiving/reproducing system (wireless AV system) 1 includes the wireless center 3 and the TV main unit (AV output device) 5. As described above, in the television receiving/reproducing system 1, the wireless center 3 having the tuner section, and the TV main unit 5 having the TV section (display section) 71 are provided separately.

The wireless center 3 includes at least a tuner section 301, a first transmitting/receiving section 303, a second channel identification information memory section 305, and a first control section 307.

The tuner section 301 is used for performing channel selection, and realized by the wireless center microcomputer 41 (Fig. 2).

The first transmitting/receiving section 303 transmits/receives broadcast information of a channel selected by the tuner section 301, and other data. The first transmitting/receiving section 303 transmits the broadcast information to the second transmitting/receiving section 505 in the TV main unit 5 while bidirectionally transmitting/ receiving data (including commands) to/from the first transmitting/receiving section 505 wirelessly. The first transmitting/receiving section 303 is realized by the SS transmitting/receiving unit 45 (Fig. 2) and controlled by the first SS-CPU 57 (Fig. 2).

The second channel identification information memory section 305 stores channel identification information 305a. The channel identification information 305a is generated according to input operation, which is provided from the TV main unit 5, for causing the tuner section 301 to perform channel selection. The channel identification information 305a is also used for identifying a selected channel. The second channel identification memory section 305 is realized by the EEPROM47 (Fig. 2).

The first control section 307 transmits the channel identification information 305a, which is stored in the second channel identification information memory section 305, to the TV main unit 5 in one transmission. The fist control section 307 is realized by the wireless center microcomputer 41 (Fig. 2).

The TV main unit 5 includes at least the TV section 71, a channel selection input section 503, the second transmitting/ receiving section 505, a first channel identification information memory section 507, a command conversion section 509, and a second control section 511.

The TV section 71 outputs video and/or audio based on the broadcasting information.

The channel selection section 503 receives the user's input operation causing the tuner section 301 in the wireless center 3 to perform the channel selection. The channel selection input section 503 is realized by the TV microcomputer 65 (Fig. 3).

The second transmitting/receiving section 505 receives the broadcast information sent from the wireless center 3, while bidirectionally transmitting/receiving data (including commands) to/from the wireless center 3 wirelessly. The second transmitting/receiving section 503 is realized by the SS transmitting/receiving unit 61 (Fig. 3) and controlled by the second SS-CPU 85 (Fig. 3).

The first channel identification information memory section 507 stores channel identification information 507a. The first channel identification information 507a is available for identifying a channel selected by up-down input operation, when the up-down channel selection is performed by the user's input. Here, the first channel identification information 507a is skip information which indicates, based on a currently selected channel, whether or not a station has been registered for a channel selected by the up-down input operation. Further, the channel identification information 507a is obtained from the wireless center 3 based on the channel scan. That is, the channel identification information 507a is a copy of the channel identification information 305a. The first channel identification information memory section 507 is realized by the EEPROM 73 (Fig. 3).

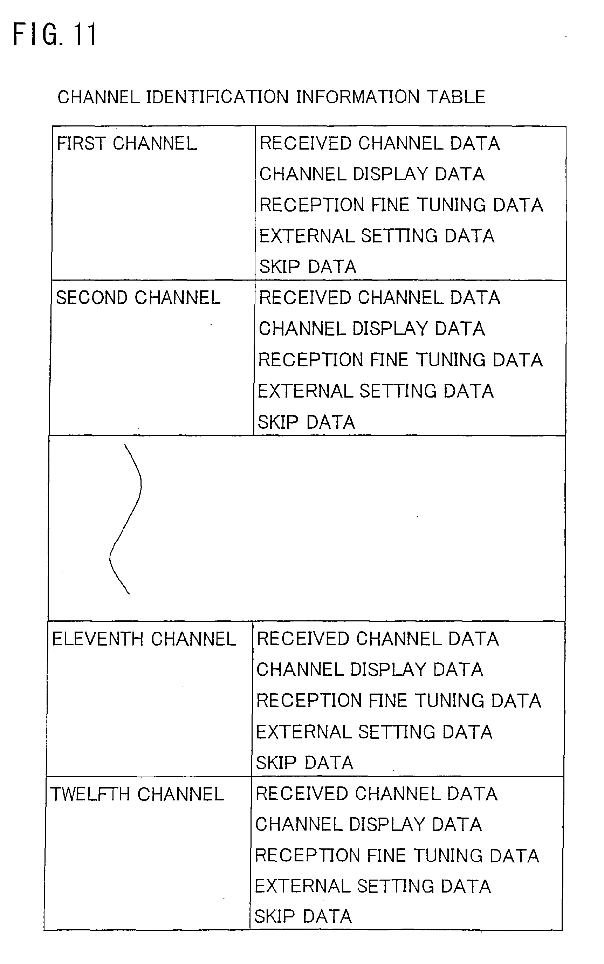

Fig. 11 is an explanatory view representing one example of a data structure of the channel identification information 305a and 507a. As shown in Fig. 11, the channel identification information 305a and 507a is managed by associating the received channel data, the channel display data, the reception fine tuning data, the external setting data, the skip data, or the like with each channel.

The command conversion section 509 converts, with reference to the channel identification information 507a, the up-down input operation into a direct command for causing the tuner section 301 in the wireless center 3 to directly perform channel selection. The command conversion section 509 is realized by the TV microcomputer 65 (Fig. 3).

The second control section 511 generates, when the up-down channel selection is performed by the user's input operation, a direct channel selection command and transmits the direct channel selection command to the wireless center 3. The direct channel selection command serves to directly select a channel identified by the up-down input operation with reference to the channel identification information 507a, which is stored in the first channel identification information memory section 507. The second control section 511 is realized by the TV microcomputer 65 (Fig. 3).

Described next is how to select a channel between the wireless center 3 and the TV main unit 5 in the television receiving/reproducing system 1.

First, based on the input operation received by the channel selection input section 503 in the TV main unit 5, the tuner section 301 in the wireless center 3 performs channel selection. Next, based on a result of the channel selection performed by the tuner section 301, the first control section 307 collects the channel identification (setting) information 305a, which includes skip information indicative of whether or not a station has been registered for each channel. The channel identification information 305a is transmitted to the TV main unit 5 wirelessly. Then, the channel identification information 305a is received by the second control section 511 and stored in the first channel identification information memory section 507 as the channel identification information 507a.

Next, based on the up-down channel selection performed by the channel selection input section 503, the command conversion section 509 detects a channel identified with reference to the channel identification information 507a stored in the first channel identification information memory section 507. Then, the command conversion section 509 generates a direct channel selection command for selecting the identified channel. The direct channel selection command is transmitted to the wireless center 3 by the second transmitting/receiving section 505.

Note that, the channel identification information 305a may be transmitted to the TV main unit 5 in one transmission by the first control section 307.

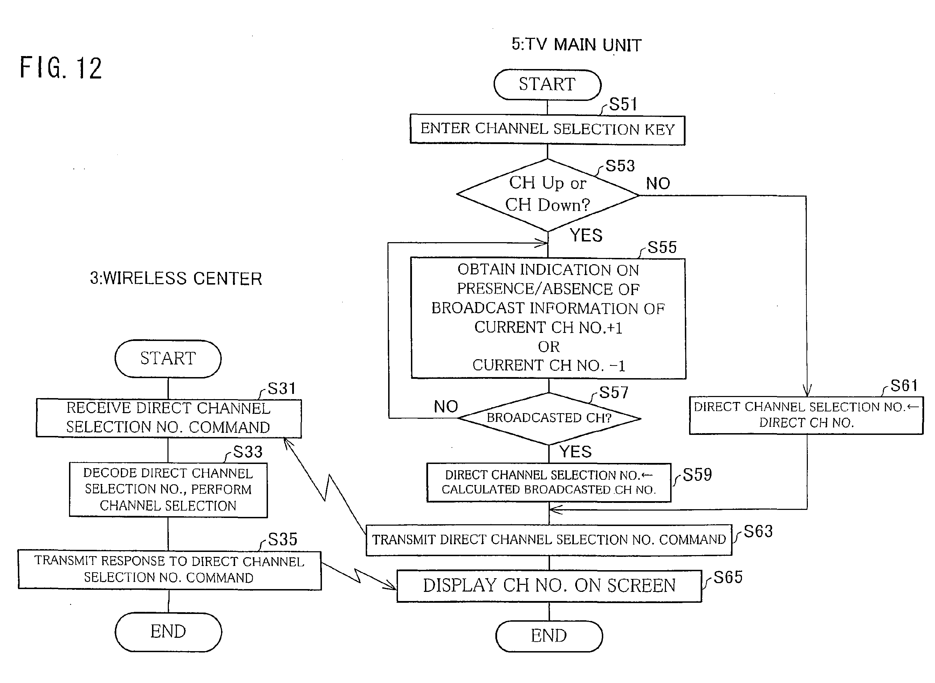

With reference to Fig. 12, the following describes a procedure of a series of processes such as generating and transmitting a direct channel selection command, changing a selected channel, or the like when the selected channel is changed in the television receiving/reproducing system 1.

First, the channel selection input section 503 receives a channel selection key entered by the user (S51). Next, the command conversion section 509 determines whether the channel selection key is entered by (i) using a channel up/down key; or (ii) directly inputting a channel number (S53). When the channel selection key is entered using the channel up/down key (Yes in S53), information (information indicating presence/absence of broadcast information) indicative of whether or not a broadcast station is allocated to a channel number, which is added to/subtracted from a current channel number, is obtained with reference to the channel identification information 507a (S55). Then, based on the information indicating presence/absence of broadcast information, the process in S55 is repeated until a broadcasted channel is found (S57). When the broadcasted channel is found (Yes in S57), a calculated channel number for the broadcasted channel is set as a direct channel selection number (S59). On the other hand, when the channel number is directly inputted by the user in S51 (No in S53), the inputted channel number is directly set as the direct channel selection number (S61).

Next, the second control section 511 transmits the direct channel selection number as a command to the wireless center 3 (S63).

In the wireless center 2, based on the direct channel selection number received from the TV main unit 5, the tuner section 301 decodes the command to perform channel selection (S33), and transmits the selected channel number as a command to the TV main unit 5 (S35).

In the TV main unit 5, the channel number received from the TV main unit 5 is displayed in the TV section 71 (S65).

For example, when the currently selected channel is channel 10 in S55 and the channel up key is entered, the command conversion section 509 determines a station-registered channel number based on information indicating the presence/absence of broadcast information on channels cycled through by increasing the channel number one by one. Then, the command conversion section 509 converts the station-registered channel number to a direct channel key for channel selection, and transmits the key to the tuner section 301. In this way, the TV main unit 5 has information of tuning in the tuner section 301, so as to determine whether or not a broadcast station has been allocated to the channel number.

In the television receiving/reproducing system 1, the tuner is provided in the wireless center 3, and the display section is provided in the TV main unit 5. That is, the tuner and the display section are provided separately, and connected so as to perform communication wirelessly. In the system, when the channel up/down selection key is entered in the TV main unit 5, correspondingly, the key is converted to a direct channel selection command and the command is sent to the tuner. This eliminates the process of decoding the command in the tuner. Thus, a delay time involved in the interval time for exchanging commands is shortened, so that a good response to the user's input for channel up-down selection is provided.

The above description is made as to embodiments of the present invention. However, the present invention is not limited to the embodiments, and various modifications are possible. Although the description is made as to the television receiving/reproducing system by way of example, the present invention can be applied to other AV systems such as personal computers, DVD systems, or the like. Further, as an example, the description is made as to an application to AV devices connected to perform communication wirelessly. However, the application to AV devices connected to the network with wires is also possible.

Further, in the above-described television receiving/reproducing system 1, functional blocks (Fig. 10) of the devices may be constituted by a hardware logic, or may be realized by software using a CPU as described below.

That is, the wireless center 3 and the TV main unit 5 include: (i) a CPU (central processing unit) for implementing instructions from control programs which realize various functions; (ii) ROM (read only memory) for storing the programs; (iii) RAM (random access memory) for developing the programs; and (iv) a recording device (recording medium)such as memory or the like which stores the programs and various data; (iv) and the like. Further, the object of the present invention can be attained by: (i) supplying the devices with a computer-readable recording medium which stores program codes for the control programs (i.e., software realizing the functions) for the wireless center 3 and/or the TV main unit 5 (execute form program, intermediate code program, source program); and (ii) causing a computer (or CPU, MPU) to read the program codes stored in the recording medium. Contents stored in the recording medium are not limited to the programs, and may be data.

Examples of the recording medium include a tape such as an electromagnetic tape, a cassette tape or the like; a disk such as magnetic disk including a floppy disk®, a hard disk or the like, or an optical disk including a CD-ROM, an MO, an MD, a DVD, a CD-R or the like; a card such as an IC card (including a memory card), an optical card or the like; or a semiconductor memory such as a mask ROM, an EPROM, an EEPROM, a flash ROM or the like.

The wireless center 3 and/or the TV main unit 5 may be configured to communicate with the communication network, so as to supply the program codes via the communication network. The communication network is not specifically limited, and Internet, Intranet, Extranet, LAN, ISDN, VAN, CATV communication network, virtual private network, telephone line network, mobile communication network, satellite communication network, or the like may be used, for example. Further, the transmission medium constituting the communication network is not specifically limited, and wires such as IEEE1394, USB, power-line carrier, cable TV lines, telephone lines, ADSL lines or the like; infrared rays such as IrDA or remote control; radio such as Bluetooth, 802.11 radio, HDR, portable phone lines, satellite lines, ground wave digital network or the like may be used, for example. The present invention may be realized by carrier wave in which the program codes are electronically transmitted, or realized in a form of data signal lines.

The present embodiment does not limit scope of the invention, and may be modified in various ways within the scope of the invention. For example, the following arrangements are possible.

The wireless AV system of the present invention may include a wirelesss center having a tuner section for performing channel selection, and a first transmitting/receiving section for transmitting/receiving broadcast information of a channel selected by the tuner section and other data; and an AV output device having: a display section, a channel selection input section for receiving input operation causing the tuner section to perform channel selection, a second transmitting/receiving section capable of receiving the broadcast information and transmitting/receiving data wirelessly to/from the first transmitting/receiving section, and a first channel identification information memory section for storing, when channel up-down operation is performed as the input operation, channel identification information being available for identifying a channel selected by the up-down input operation.

According to the above arrangement, when the channel up-down operation is performed in the AV output device, the channel selected by the up-down input operation can be identified with reference to the channel identification information stored in the first channel identification information memory section, and transmitted to the tuner side. This reduces a delay time involved in the exchange of commands, which has conventionally been a problem, so that a response to a user's input for up-down channel selection can be improved.

Further, in the wireless AV system of the present invention, the wireless AV system may include a command conversion section for converting, with reference to the channel identification information, the up-down input operation to a direct command which serves to perform channel selection in the tuner section.

According to the above arrangement, when the channel up-down operation is performed in the AV output device, with reference to the channel identification information stored in the first channel identification information memory section, the channel identified by the up-down input operation can be converted to a direct channel selection command for selecting the selected channel, and transmitted to the tuner side. This reduces a delay time involved in the exchange of commands, which has conventionally been a problem, so that a response to a user's input for up-down channel selection can be improved.

In the wireless AV system of the present invention, the first channel identification information may indicate, based on a currently selected channel, whether or not a station has been registered for the channel selected by the up-down input operation.

According to the above arrangement, based on a direction of either up or down input operation and the currently selected channel, it is possible to determine whether or not a station has been registered for the selected channel. Further, a data structure for this is simple.

In the wireless AV system of the present invention, the first channel identification information is skip information obtained based on a result of the channel scan carried out in the tuner section, and may be information transmitted from the wireless center to the AV output device.

According to the above arrangement, the skip information, which is obtained based on the result of the channel scan carried out at the tuner section, is transmitted from the wireless center to the AV output device, so as to be used as the first channel identification information. This eliminates works for creating or updating the first channel identification information because separate first channel identification information need not be prepared.

The wireless center of the present invention may include a tuner section for performing channel selection; and a first transmitting/receiving section for wirelessly transmitting/receiving broadcast information of a channel selected by the tuner section and other data, the wireless center further including: a second channel identification information memory section for storing channel identification information, the channel identification information being generated responsive to an input operation causing the tuner section to perform channel selection, and identifying a channel selected by the tuner section, the input operation being provided to the tuner section from the AV output device, which is provided separately from the wireless center and includes a display section for displaying the broadcast information of the channel.

According to the above arrangement, based on the channel identification information stored in the second channel identification information memory section, the wireless center can identify a channel, which is generated in the AV output device and received from the AV output device. Thus, when the channel up-down input operation is performed in the AV output device, a channel selected by the up-down input operation is identified, and transmitted to the tuner side. This reduces a delay time involved in the exchange of commands, which has conventionally been a problem, so that a response to a user's input for up-down channel selection can be improved.

Further, the wireless center of the present invention may include a first control section. The first control section transmits the channel identification information, which is stored in the second channel identification information memory section, to the AV output device in one transmission.

In the above arrangement, assume a case that the skip information, which is obtained based on the result of the channel scan carried out in the tuner section for example, is transmitted from the wireless center to the AV output device to be used as the first channel identification information. In this case, by transmitting the channel identification information to the AV output device in one transmission, processes for creating or updating channel identification information are facilitated.

Further, the AV output device of the present invention may include a display section; a channel selection input section for receiving an input operation causing the tuner section to perform channel selection, the tuner section in a wireless center being provided separately from the display section; a transmitting/receiving section capable of receiving the broadcast information transmitted from the wireless center, and transmitting/receiving data wirelessly to/from the wireless center; and a first channel identification information memory section for storing, when a channel up-down input operation is performed as the input operation, channel identification information being available for identifying a channel selected by the up-down input operation.

According to the above arrangement, when the channel up-down operation is performed in the AV output device, with reference to the channel identification information stored in the first channel identification information memory section, a channel selected by the up-down input operation is identified, and transmitted to the tuner side. This reduces a delay time involved in the exchange of commands, which has conventionally been a problem, so that a response to a user's input for up-down channel selection can be improved.

Further, when the channel up-down operation is performed as the input operation, the AV output device of the present invention may include a second control section for generating, with reference to the channel identification information stored in the first channel identification information memory section, a direct channel selection command for directly selecting a channel identified by the up-down input operation. Further, the second control section transmits the direct channel selection command to the wireless center.

According to the above arrangement, when the channel up-down operation is performed in the AV output device, with reference to the channel identification information stored in the first channel identification information memory section, the input is converted to the direct channel selection command for selecting the channel identified by the up-down input operation, and transmitted to the tuner side. This reduces a delay time involved in the exchange of commands, which has conventionally been a problem, so that a response to a user's input for up-down channel selection can be improved.

A channel selecting method of the present invention is a channel selecting method between a wireless center and an AV output device, the wireless center including the tuner section for performing channel selection, and the AV output device including a display section, a channel selection input section which receives input operation causing the tuner section to perform the channel selection, and a memory section, the method including the steps of: causing the tuner section to perform the channel selection based on the input operation; collecting, based on a result of the channel selection performed by the tuner section, channel identification information including skip information indicative of whether or not a station has been registered for each channel and transmitting the channel identification information to the AV output device wirelessly; and storing the transmitted channel identification information in the memory section, detecting, responsive to the up-down input operation in the channel selection input section, a channel identified with reference to the channel identification information stored in the memory section, generating a direct channel selection command for selecting the identified channel, and transmitting the direct channel selection command to the wireless center side wirelessly.

According to the above arrangement, the channel identification information, which includes the skip information obtained based on the result of the channel scan carried out in the tuner section, is transmitted from the wireless center to the AV output device. When the channel up-down operation is performed in the AV output device, with reference to the channel identification information stored in the memory section, the input can be converted to a direct channel selection command for selecting a channel identified by the up-down input operation, and transmitted to the tuner side. This reduces a delay time involved in the exchange of commands, which has conventionally been a problem, so that a response to a user's input for up-down channel selection can be improved. Further, processes for creating or updating channel identification information can be facilitated because the skip information or the like generated in the tuner section is used.

The channel selecting method of the present invention is a channel selecting method in an AV output device, the AV output device being connected with a wireless center including a tuner section for performing channel selection, so as to perform communication with the wireless center wirelessly, and including a display section, a channel selection input section which receives an input operation causing the tuner section to perform the channel selection, and a memory section, the method including the steps of: causing the tuner section to perform the channel selection based on the input operation; obtaining, based on a result of the channel selection performed by the tuner section, channel identification information including skip information indicative of whether or not a station has been registered for each channel and storing the channel identification information in the memory section; and detecting, responsive to the up-down input operation in the channel selection input section, a channel identified with reference to the channel identification information stored in the memory section, generating a direct channel selection command for selecting the identified channel, and transmitting the direct channel selection command to the wireless center side wirelessly.

According to the above arrangement, the channel identification information, which includes the skip information obtained based on the result of the channel scan carried out in the tuner section, is transmitted from the wireless center to the AV output device. When the channel up-down operation is performed in the AV output device, with reference to the channel identification information stored in the memory section, the input can be converted to a direct channel selection command for selecting a channel identified by the up-down input operation, and transmitted to the tuner side. This reduces a delay time involved in the exchange of commands, which has conventionally been a problem, so that a response to a user's input for up-down channel selection can be improved. Further, processes for creating or updating channel identification information can be facilitated because the skip information or the like generated in the tuner section is used.

A channel select data generating method of the present invention is a channel select data generating method in a wireless center, the wireless center being connected with an AV output device so as to perform communication with the AV output device wirelessly, and including a tuner section for performing channel selection, the AV output device including a display section, a channel selection input section which receives an input operation causing the tuner section to perform the channel selection, and a memory section, the channel select data generating method including the steps of: causing the tuner section to perform the channel selection based on the input operation; collecting, based on a result of the channel selection, channel identification information including skip information indicative of whether or not a station has been registered for each channel; and transmitting the channel identification information wirelessly to the AV output device side in one transmission.

According to the above arrangement, in the wireless center, based on the result of the channel selection performed by the tuner section, the channel identification information, which includes the skip information indicative of whether or not a station has been registered in each channel, is collected. Then, the channel identification information is transmitted from the wireless center to the AV output device in one transmission and used as the channel identification information. Thus, there is no need of preparing separate channel identification information to be used in the AV output device. Further, this eliminates processes for creating the channel identification information because the channel identification information, which includes the skip information indicative of whether or not a station has been registered in channels, is collected.

Further, the AV system of the present invention includes a tuner device having: a tuner section for performing channel selection, and a first transmitting/receiving section for transmitting/receiving broadcast information of a channel selected by the tuner section and other data; and an AV output device being provided detachably from the tuner device, the AV output device having: a display section, a channel selection input section for receiving input operation causing the tuner section to perform the channel selection, a second transmitting/receiving section capable of receiving the broadcast information and transmitting/receiving data to/from the first transmitting/receiving section, and a first channel identification information memory section for storing, when channel up-down operation is performed as the input operation, channel identification information being available for identifying a channel selected by the up-down input operation.

According to the above arrangement, in the AV system in which the AV output device and the tuner device can be provided separately, when a channel up-down operation is performed in the AV output device, with reference to the channel identification information stored in the first channel identification information memory section, a channel selected by the up-down input operation is identified, and transmitted to the tuner side. This reduces a delay time involved in the exchange of commands, which has conventionally been a problem, so that a response to a user's input for up-down channel selection can be improved.

Note that, the wireless center may be realized by a computer. In this case, by causing the computer to function as the sections, a wireless center control program, which realizes the wireless center in the computer, and a computer-readable recording medium storing the control program are within the scope of the present invention.

Further, the AV output device may be realized by a computer. In this case, by causing the computer to function as the sections, a wireless center control program, which realizes the AV output device in the computer, and a computer-readable recording medium storing the control program are within the scope of the invention.

Further, the wireless AV system of the present invention may include a wirelesss center having: a tuner section for performing channel selection, and a first transmitting/receiving section for transmitting/receiving broadcast information of a channel selected by the tuner section and other data; and an AV output device having: a display section, a channel selection input section for receiving an input operation causing the tuner section to perform channel selection, a second transmitting/receiving section capable of receiving the broadcast information and transmitting/receiving data wirelessly to/from the first transmitting/receiving section, and a first channel identification information memory section for storing, when channel up-down operation is performed as the input operation, channel identification information being available for identifying a channel selected by the up-down input operation.

In the wireless AV system of the present invention, the AV output device further includes a command conversion section for converting, with reference to the channel identification information, the up-down input operation to a direct command for causing the tuner section to directly select a channel.

Further, in the wireless AV system of the present invention, the first channel identification information is the skip information indicative of whether or not a station has been registered for a channel selected by the up-down input operation, and may be obtained from the wireless center based on the channel scan.

Further, the wireless center of the present invention may include a tuner section for performing channel selection; and a first transmitting/receiving section for wirelessly transmitting/receiving broadcast information of a channel selected by the tuner section and other data, the wireless center further including: a second channel identification information memory section for storing channel identification information, the channel identification information being generated responsive to an input operation causing the tuner section to perform channel selection, and identifying a channel selected by the tuner section, the input operation being provided to the tuner section from the AV output device, which is provided separately from the wireless center and includes a display section for displaying the broadcast information of the channel.

Further, the wireless center of the present invention may include a first control section for transmitting the channel identification information, which is stored in the second channel identification information memory section, to the AV output device in one transmission.

Further, the AV output device of the present invention may include a display section; a channel selection input section for receiving an input operation causing the tuner section to perform channel selection, the tuner section in a wireless center being provided separately from the display section; a transmitting/ receiving section capable of receiving the broadcast information transmitted from the wireless center, and transmitting/receiving data wirelessly to/from the wireless center; and a first channel identification information memory section for storing, when channel up-down input operation is performed as the input operation, channel identification information being available for identifying a channel selected by the up-down input operation.

Further, when a channel up-down input operation is performed, the AV output device of the present invention may include a second control section for generating, with reference to the channel identification information stored in the first channel identification information memory section, a direct channel selection command for directly selecting a channel identified by the up-down input operation. The second control section transmits the direct channel selection command to the wireless center.

Further, the channel selecting method of the present invention may be a channel selecting method between a wireless center and an AV output device, the wireless center including the tuner section for performing channel selection, and the AV output device including a display section, a channel selection input section which receives an input operation causing the tuner section to perform the channel selection, and a memory section, the method including the steps of: causing the tuner section to perform the channel selection based on the input operation; collecting, based on a result of the channel selection performed by the tuner section, channel identification information including skip information indicative of whether or not a station has been registered for each channel and transmitting the channel identification information to the AV output device wirelessly; and storing the transmitted channel identification information in the memory section, detecting, responsive to the up-down input operation in the channel selection input section, a channel identified with reference to the channel identification information stored in the memory section, generating a direct channel selection command for selecting the identified channel, and transmitting the direct channel selection command to the wireless center side wirelessly.

The channel selecting method of the present invention is a channel selecting method in an AV output device, the AV output device being connected with a wireless center including a tuner section for performing channel selection, so as to perform communication with the wireless center wirelessly, and including a display section, a channel selection input section which receives an input operation causing the tuner section to perform the channel selection, and a memory section, the method including the steps of: causing the tuner section to perform the channel selection based on the input operation; obtaining, based on a result of the channel selection performed by the tuner section, channel identification information including skip information indicative of whether or not a station has been registered for each channel and storing the channel identification information in the memory section; and detecting, responsive to the up-down input operation in the channel selection input section, a channel identified with reference to the channel identification information stored in the memory section, generating a direct channel selection command for selecting the identified channel, and transmitting the direct channel selection command to the wireless center side wirelessly.

Further, the channel select data generating method of the present invention may be a channel select data generating method in a wireless center, the wireless center being connected with an AV output device so as to perform communication with the AV output device wirelessly, and including a tuner section for performing channel selection, the AV output device including a display section, a channel selection input section which receives an input operation causing the tuner section to perform the channel selection, and a memory section, the channel select data generating method including the steps of: causing the tuner section to perform the channel selection based on the input operation; collecting, based on a result of the channel selection, channel identification information including skip information indicative of whether or not a station has been registered for each channel; and transmitting the channel identification information wirelessly to the AV output device side in one transmission.

Further, the AV system of the present invention may include a tuner device having: a tuner section for performing a channel selection, and a first transmitting/receiving section for transmitting/receiving broadcast information of a channel selected by the tuner section and other data; and an AV output device being provided detachably from the tuner device, the AV output device having: a display section, a channel selection input section for receiving an input operation causing the tuner section to perform the channel selection, a second transmitting/receiving section capable of receiving the broadcast information and transmitting/receiving data to/from the first transmitting/receiving section, and a first channel identification information memory section for storing, when channel up-down operation is performed as the input operation, channel identification information being available for identifying a channel selected by the up-down input operation. It will be obvious that the invention thus described may be varied in many ways. Such variations are not to be regarded as a departure from the spirit and scope of the invention, but rather as being obvious to these skilled in the art and included within the spirit and scope of the following claims.

### INDUSTRIAL APPLICABILITY

The wireless AV system of the present invention is preferably used in a home AV network system such as a display-separated wireless TV receiver, for example, which transmits video and/or audio data wirelessly. However, the present invention is not limited to this, and may be widely applied in wireless communication devices such as portable telephones/PHS (personal handy-phone system) ®, PDA (personal digital assistants), personal computer monitor having a TV receiving function, or the like. Specifically, examples of preferable video sources are television program broadcast or data broadcast, which uses the internet, television reception using a mobile television or portable telephone, program reception using a LAN spot, or the like.

## Claims

1. A wireless AV system comprising:
a wirelesss center having:
a tuner section for performing channel selection, and
a first transmitting/ receiving section for transmitting/receiving broadcast information of a channel selected by the tuner section and other data;
and
an AV output device having:
a display section,
a channel selection input section for receiving an input operation causing the tuner section to perform channel selection,
a second transmitting/ receiving section capable of receiving the broadcast information and transmitting/receiving data wirelessly to/from the first transmitting/receiving section, and
a first channel identification information memory section for storing channel identification information being available for identifying a channel selected by the up-down input operation.

2. The wireless AV system of claim 1, further comprising a command conversion section for converting, with reference to the channel identification information, the up-down input operation to a direct command for causing the tuner section to directly perform channel selection.

3. The wireless AV system of claim 1 or 2, wherein the first channel identification information indicates, based on a currently selected channel, whether or not a station has been registered for a channel selected by the up-down input operation.

4. The wireless AV system of claim 3, wherein the first channel identification information is skip information obtained based on a result of a channel scan carried out in the tuner section, and transmitted from the wireless center to the AV output device.

5. A wireless center comprising:
a tuner section for performing channel selection; and
a first transmitting/receiving section for wirelessly transmitting/receiving broadcast information of a channel selected by the tuner section and other data,
the wireless center further comprising:
a second channel identification information memory section for storing channel identification information, the channel identification information being generated responsive to an input operation causing the tuner section to perform channel selection, and identifying a channel selected by the tuner section, the input operation being provided to the tuner section from the AV output device, which is provided separately from the wireless center and includes a display section for displaying the broadcast information of the channel.

6. The wireless center of claim 5, further comprising a first control section for transmitting the channel identification information stored in the second channel identification information memory section to the AV output device in one transmission.

7. A control program for a wireless center, the control program causing the wireless center of claim 5 to function,
the control program causing a computer to function as at least either of the tuner section or the first transmitting/receiving section.

8. A computer-readable recording medium, wherein the control program for the wireless center of claim 7 is stored.

9. An AV output device comprising:
a display section;
a channel selection input section for receiving an input operation causing the tuner section to perform channel selection, the tuner section in a wireless center being provided separately from the display section;
a transmitting/receiving section capable of receiving the broadcast information transmitted from the wireless center, and transmitting/receiving data wirelessly to/from the wireless center; and
a first channel identification information memory section for storing, when a channel up-down input operation is performed as the input operation, channel identification information being available for identifying a channel selected by the up-down input operation.

10. The AV output device of claim 9, comprising a second control section for generating, with reference to the channel identification information stored in the first channel identification information memory section, a direct channel selection command and transmitting the direct channel selection command to the wireless center when a channel up-down input operation is performed as the input operation, the direct channel selection command being used for directly selecting a channel identified by the up-down input operation.

11. A control program for an AV output device, the control program causing the AV output device of claim 9 to function,
the control program causing a computer to function as at least either of the channel selection input section or the transmitting/receiving section.

12. A computer-readable recording medium, wherein the control program for the AV output device of claim 11 is stored.

13. A channel selecting method, which is a channel selecting method between a wireless center and an AV output device, the wireless center including the tuner section for performing channel selection, and the AV output device including a display section, a channel selection input section which receives an input operation causing the tuner section to perform the channel selection, and a memory section,
the method comprising the steps of:
causing the tuner section to perform the channel selection based on the input operation;
collecting, based on a result of the channel selection performed by the tuner section, channel identification information including skip information indicative of whether or not a station has been registered for each channel and transmitting the channel identification information to the AV output device wirelessly; and
storing the transmitted channel identification information in the memory section, detecting, responsive to the up-down input operation in the channel selection input section, a channel identified with reference to the channel identification information stored in the memory section, generating a direct channel selection command for selecting the identified channel, and transmitting the direct channel selection command to the wireless center side wirelessly.

14. A channel selecting method, which is a channel selecting method in an AV output device, the AV output device being connected with a wireless center including a tuner section for performing channel selection, so as to perform communication with the wireless center wirelessly, and including a display section, a channel selection input section which receives an input operation causing the tuner section to perform the channel selection, and a memory section,
the method comprising the steps of:
causing the tuner section to perform the channel selection based on the input operation;
obtaining, based on a result of the channel selection performed by the tuner section, channel identification information including skip information indicative of whether or not a station has been registered for each channel and storing the channel identification information in the memory section; and
detecting, responsive to the up-down input operation in the channel selection input section, a channel identified with reference to the channel identification information stored in the memory section, generating a direct channel selection command for selecting the identified channel, and transmitting the direct channel selection command to the wireless center side wirelessly.

15. A channel select data generating method, which is a channel select data generating method in a wireless center, the wireless center being connected with an AV output device so as to perform communication with the AV output device wirelessly, and including a tuner section for performing channel selection, the AV output device including a display section, a channel selection input section which receives an input operation causing the tuner section to perform the channel selection, and a memory section,
the method comprising the steps of:
causing the tuner section to perform the channel selection based on the input operation;
collecting, based on a result of the channel selection, channel identification information including skip information -indicative of whether or not a station has been registered for each channel; and
transmitting the channel identification information wirelessly to the AV output device side in one transmission.

16. An AV system comprising:
a tuner device having:
a tuner section for performing channel selection,
and
a first transmitting/ receiving section for transmitting/receiving broadcast information of a
channel selected by the tuner section and other data; and
an AV output device being provided separably from the tuner device,
the AV output device having:
a display section,
a channel selection input section for receiving an input operation causing the tuner section to perform the channel selection,
a second transmitting/receiving section capable of receiving the broadcast information and transmitting/ receiving data to/from the first transmitting/receiving section, and
a first channel identification information memory section for storing, when a channel up-down operation is performed as the input operation, channel identification information being available for identifying a channel selected by the up-down input operation.
